# EUROPÄISCHE PATENTANMELDUNG

(11) **EP 2 859 933 A2**
(43) Veröffentlichungstag der Anmeldung: **15.04.2015**
(21) Anmeldenummer: 14003760.7
(22) Anmeldetag: 11.10.2013
(51) Int. Cl.: B01D 46/00, B01D 46/10, B01D 29/01, H01M 8/02

(54) **Filter**

(62) Teilanmeldung aus: 13004899.4
(71) Anmelder: Massold, Andreas, 72336 Balingen (DE); Sommer, Frank, 72336 Balingen (DE)
(72) Erfinder: Massold, Andreas, 72336 Balingen (DE); Sommer, Frank, 72336 Balingen (DE)
(74) Vertreter: Späth, Dieter

(57) **Zusammenfassung**

Die Erfindung schlägt vor, eine Dichtung (8) durch Drucken an einem Filter (1) anzubringen, beispielsweise linienförmig an seinem Rand (5) . Die Erfindung ermöglicht eine sehr dünne Dichtung (8).

## Beschreibung

Die Erfindung betrifft ein Filter mit einer Dichtung und/oder einem Rahmen mit den Merkmalen des Oberbegriffs des Anspruchs 1.

Mit Filter ist ein vorzugsweise flächiges, d. h. im Verhältnis zu Länge und Breite dünnes Filtermedium, beispielsweise ein Gewebe, Gewirke, Gestrick oder Vlies gemeint, dessen Fasern beispielsweise aus Metall, Kunststoff oder Glas bestehen. Die Aufzählungen sind beispielhaft und nicht abschließend. Das Filter kann eben sein oder eine dreidimensionale Form aufweisen, beispielsweise zick-zack-, mäander-, zylinder-, kegelstumpfförmig oder zweidimensional gewölbt sein.

Das Filter weist eine vorzugsweise linienförmige Dichtung insbesondere entlang eines Randes auf, wobei die Dichtung auch flächenförmig sein kann. Der Rand kann ein Außenrand oder, wenn das Filter ein oder mehrere Löcher aufweist, ein Innenrand sein. Die Dichtung kann auch innerhalb des Filters mit Abstand von Rändern des Filters verlaufen. Die Dichtung besteht insbesondere aus einem technischen, dauerelastischen Kunststoff, beispielsweise einem Elastomer, Hartkunststoff, Polyamid, Polyester, beispielsweise Fluorsilikon für ein Ölfilter oder beispielsweise Polypropylen als Träger und nicht unbedingt als Filter einer Membran für eine Brennstoffzelle. Die Aufzählung ist beispielhaft und nicht abschließend. Die Dichtung ist insbesondere ein Vollmaterial, also kein Schaum, d. h. sie weist keine beabsichtigten Poren, Gaseinschlüsse, Lunker oder dgl. Hohlräume auf.

Anstelle der Dichtung oder zusätzlich zu der Dichtung kann das Filter einen Rahmen aufweisen, der dem Filter eine mehr oder weniger große Stabilität gibt.

Bekannt ist beispielsweise ein Aufkleben oder sonstiges Anbringen einer vorgefertigten Dichtung an einem Filter. Auch ist es möglich, eine Dichtung durch Spritzgießen an einem Filter anzubringen, wozu das Filter in eine Spritzgießform eingelegt wird. Ein Spritzgießen erfordert ein Spritzgießwerkzeug, das die Form der herzustellenden Dichtung als Hohlraum aufweist, der als Kavität bezeichnet wird. Damit eine plastifizierte Masse beim Spritzgießen die Kavität vollständig ausfüllt ist ein ausreichender Querschnitt der Kavität erforderlich, die auch von der zu durchströmenden Länge der Kavität abhängt. Eine Höhe von 400 µm der Kavität wird heute als Untergrenze des machbaren beim Kunststoff-Spritzgießen angesehen, sofern Oberflächen, mit denen der plastifizierte Kunststoff beim Spritzgießen in Berührung kommt, glatt sind. Befindet sich ein Gewebe, Vlies oder dgl. Filtermedium in der Kavität, muss die Kavität wegen einer Bremswirkung des Filtermediums erheblich höher sein, es wird von mindestens der doppelten bis dreifachen Höhe der Kavität ausgegangen. Das Filtermedium bremst nicht nur den plastifizierten und unter Druck in die Kavität gespritzten Kunststoff, sondern der fließende Kunststoff schiebt Fasern des Filtermediums vor sich her und knautscht die Fasern zusammen, so dass sie die Kavität versperren.

Aufgabe der Erfindung ist ein Filter mit einer Dichtung vorzuschlagen, wobei eine kleine Höhe der Dichtung möglich sein soll. Mit Höhe der Dichtung ist deren Erhebung über eine Ober- oder Deckfläche des Filters gemeint, also eine gedachte Fläche, die Fasern des Filters an äußersten Stellen berührt.

Diese Aufgabe wird erfindungsgemäß durch die Merkmale des Anspruchs 1 gelöst. Erfindungsgemäß ist die Dichtung auf das Filter gedruckt, wobei anstelle einer Druckfarbe ein Dichtmaterial auf das Filter gedruckt wird. Das Drucken ist ein Urformen, mit dem die Dichtung hergestellt und zugleich am Filter angebracht wird.

Die Erfindung ermöglicht eine dünne und niedrige Dichtung.

Es ist Dichtungsmaterial verwendbar, das bei Raumtemperatur oder einer höheren Temperatur auf das Filter gedruckt werden kann. Das Dichtungsmaterial ist beispielsweise ein plastifizierter Duro- oder Thermoplast oder ein thermisch vernetzender Kunststoff wie beispielsweise Silikon.

Durch Drucken lässt sich die Dichtung in einer oder mehreren Schichten für eine größere Dicke bzw. Höhe der Dichtung aufbringen. Es sind grundsätzlich alle bekannten Druckverfahren zum Aufbringen der Dichtung auf das Filter möglich, also beispielsweise Hoch-, Flach-, Tief-, Sieb-, Flexo- oder Offset-Druck. Bei Druckverfahren wie dem Sieb-, oder Flexodruck, bei denen das Dichtungsmedium als Punkte aufgebracht wird, ist darauf zu achten, dass das Dichtungsmedium so weit verfließt, dass sich die Punkte vereinigen um eine durchgehende Dichtung ohne Durchlässe zu schaffen. Beim Aufdrucken der Dichtung durchdringt das Dichtungsmaterial das Filtermedium, so dass das Dichtungsmaterial Fasern des Filtermediums ohne Durchlässe abdichtend umschließt. Ein weiterer Vorteil der Erfindung ist, dass das Dichtungsmaterial beim Aufdrucken das Filtermedium durchdringt und Fasern des Filters umschließt, so dass die Fasern des Filters gehalten sind. Wird beispielsweise das Filter nach dem Aufdrucken der Dichtung entlang der Dichtung geschnitten, hält die Dichtung Filterfasern am Rand des Filters und vermeidet, dass kurze Faserstücke des Filters in ein zu filterndes Medium gelangen.

Ist die Dichtung an einem (Außen- oder Innen-)Rand des Filters angebracht, sieht eine Ausgestaltung der Erfindung vor, dass die Dichtung den Rand des Filters umgreift, d. h. die Dichtung eine Art Fassung für den Rand des Filters bildet. Diese Ausgestaltung der Erfindung verbessert eine Dichtwirkung und vermeidet ein Lösen kurzer, durch Schneiden des Filters entstandener Fasern am Rand des Filters.

Eine Ausgestaltung der Erfindung sieht vor, dass das Filter beim Aufdrucken der Dichtung auf einer Auflage aufliegt, die in dem Bereich der Dichtung eine Vertiefung, beispielsweise eine Rinne für eine linienförmige Dichtung aufweist. Diese Ausgestaltung der Erfindung ermöglicht das Anbringen einer Dichtung am Filter, die das Filter durchdringt und sich beidseitig über Ober- bzw. Deckflächen des Filters erhebt.

Eine Ausgestaltung der Erfindung sieht vor, dass das Filter einen Träger für eine Membran beispielsweise für eine Brennstoffzelle bildet. Das Filter, dient in diesem Fall als mechanischer Träger der Membran und hat nicht unbedingt die Funktion eines Filters.

Eine Ausgestaltung der Erfindung sieht eine Höhe der Dichtung über eine Ober- bzw. Deckfläche des Filters von etwa 500 µm oder weniger, vorzugsweise von etwa 200 µm oder weniger und besonders bevorzugt von etwa 20 µm oder weniger vor. Grundsätzlich ermöglicht die Erfindung eine Dichtung mit beliebig kleiner Höhe über der Ober- bzw. Deckfläche des Filters beginnend ab einer Höhe von Null.

Eine Ausgestaltung der Erfindung sieht ein dreidimensional umgeformtes Filter vor. Dazu wird ein ebenes oder eindimensional gewölbtes, beispielsweise gerolltes Filter nach dem Anbringen der Dichtung beispielsweise durch eine Art Tiefziehen dreidimensional zu einem beispielsweise gewölbten Körper umgeformt.

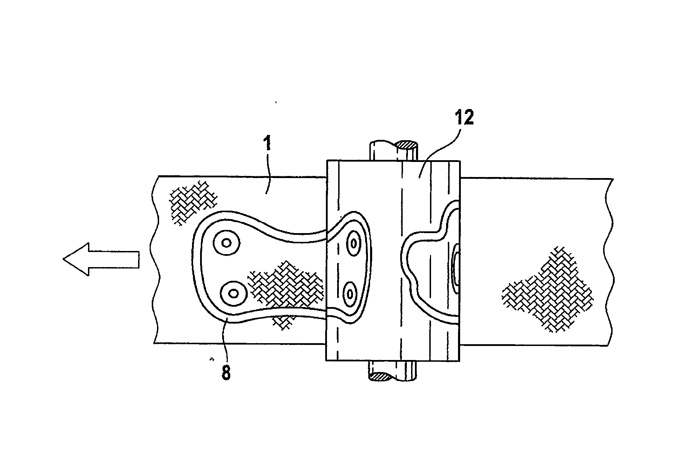

Die Erfindung wird nachfolgend anhand in der Zeichnung dargestellter Ausführungsbeispiele näher erläutert. Die einzige Figur zeigt eine Aufsicht auf ein Filter gemäß der Erfindung bei seiner Herstellung.

Die Figur zeigt eine durch Drucken beispielsweise mit einer Druckwalze 12 auf ein Filter 1 aufgebrachte Dichtung 8. Das Filter 1 weist ein Gewebe 2 aus Kunststofffasern auf. Anstelle des Gewebes ist beispielsweise auch ein Gestrick, Gewirk oder Vlies verwendbar. Anstatt aus Kunststoff können die Fasern beispielsweise auch aus Glas, Metall, Kohlenstoff oder Stein oder Mischungen bestehen. Anstelle von Druckfarbe wird Dichtungsmaterial auf das Filter 1 gedruckt, das das Filter 1 durchdringt und Fasern des Filters 1 hermetisch dicht umschließt ohne Durchlässe zwischen den Fasern des Filters 1. Zur Erzielung einer größeren Dicke der Dichtung 8 kann das Dichtungsmaterial mehrfach, d. h. in Schichten auf das Filter 1 aufgedruckt werden. Das Dichtungsmaterial wird pastös aufgedruckt und bildet nach einem Aushärten eine dauerelastische, linienförmige Dichtung 8 entlang von Außen- und, sofern vorhanden, Innenrändern des Filters 1. Innen-ränder weist beispielsweise ein Filter 1 mit Löchern für beispielsweise Durchführungen oder Verschraubungen auf.

Die Dichtung 8 lässt sich auch flächig und/oder innerhalb des Filters 1 und nicht nur an den Rändern aufdrucken (nicht dargestellt). Die Dichtung 8 ist dünn, sie erhebt sich im Ausführungsbeispiel nur um etwa 20 µm über eine Ober- bzw. Deckfläche 10 des Filters 1. Die Ober- oder Deckfläche 10 ist eine gedachte Fläche, die die Fasern des Filters 1 an deren äußersten Punkten berührt. Im Ausführungsbeispiel hat das Filter 1 eine Dicke D von etwa 150 µm, wobei die mit h bezeichnete Erhebung der Dichtung 8 nicht proportional zur Dicke D des Filters 1 sondern grundsätzlich unabhängig von der Dicke D des Filters 1 ist. Die Erhebung h der Dichtung 8 über die Ober- bzw. Deckfläche 10 des Filters 1 kann auch kleiner sein, sie kann grundsätzlich beliebig zwischen Null, einigen µm, einigen 10 µm oder einigen 100 µm hoch sein.

Es sind grundsätzlich alle Druckmethoden wie Hoch-, Flach-, Tief-, Offset-Sieb-oder Flexodruck möglich, wobei bei Druckverfahren, die einzelne Punkte (Pixel) drucken ein Verfahrensparameter wie Fliesfähigkeit des Dichtungsmaterials und dessen Andruck an und in das Gewebe des Filters 1 so gewählt werden sollten, dass die einzelnen Druckpunkte ineinander fließen und sich eine zusammenhängende, linien- oder evtl. auch flächenförmige Dichtung 8 ohne Unterbrechungen bildet. Nach dem Drucken der Dichtung 8 kann das Dichtungsmaterial gepresst, beispielsweise mit einer oder mehreren Walzen kalandriert werden, so lange es noch nicht (voll) ausgehärtet ist. Dadurch lassen sich einzelne aus Dichtungsmaterial gedruckte Punkte zu einer unterbrechungsfreien Dichtung 8 umformen und verbinden und/oder eine Dicke und/oder Erhebung h der Dichtung 8 über die Ober- oder Deckfläche 10 des Filters 1 auf ein gewünschtes Maß kalibrieren bzw. einstellen.

Nach dem Drucken der Dichtung 8 werden die Innenränder des Filters 1 geschnitten und das Filter 1 entlang des Außenrandes ausgeschnitten. Die Ränder des Filters 1 werden innerhalb der Dichtung 8 geschnitten, die Dichtung 8 fixiert die Fasern an den Rändern und verhindert, dass durch den Schnitt entstehende kurze Faserstücke sich beim Gebrauch vom Filter 1 lösen. Wird die Dichtung 8 auf einen Rand eines zugeschnittenen oder gestanzten Filters 1 gedruckt, umschließt die Dichtung 8 den Rand des Filters 1.

Das Dichtungsmaterial ist beispielsweise ein Elastomer, ein Hartkunststoff wie Polyamid, Polyester, für technische Öle beispielsweise Fluorsilikon oder als Träger für eine Membran für eine Brennstoffzelle beispielsweise Polypropylen. Nach dem Aushärten des Dichtungsmaterials ist die Dichtung 8 dauerelastisch. Die Dichtung 8 besteht aus einem technischen Kunststoff und weist keine beabsichtigten Hohlräume auf, ist also kein Schaum sondern ein dauerelastisches Vollmaterial ohne beabsichtigte Poren oder dgl.

Die Erfindung ermöglicht auch ein mehrlagiges Filter mit einer durch Aufdrucken an den Rändern und/oder innerhalb einer Fläche des Filters angebrachten Dichtung und/oder einem Rahmen zu verbinden.

Nach dem Aufdrucken der Dichtung 8 kann das Filter 1 beispielsweise durch eine Art Tiefziehen gewölbt, d. h. dreidimensional umgeformt werden (nicht dargestellt).

## Patentansprüche

1. Filter mit einer Dichtung (8), **dadurch gekennzeichnet, dass** die Dichtung (8) auf das Filter (1) gedruckt ist.

2. Filter nach Anspruch 1, **dadurch gekennzeichnet, dass** die Dichtung (8) an einem Rand des Filters (1) angebracht ist und insbesondere den Rand umgreift.

3. Filter nach einem der vorhergehenden Ansprüche, **dadurch gekennzeichnet, dass** das Filter (1) beim Anbringen der Dichtung (8) auf einer Auflage aufliegt, die eine Vertiefung im Bereich der Dichtung (8) aufweist.

4. Filter nach einem der vorhergehenden Ansprüche, **dadurch gekennzeichnet, dass** das Filter (1) einen Träger einer Membran bildet.

5. Filter nach einem der vorhergehenden Ansprüche, **dadurch gekennzeichnet, dass** die Dichtung (8) eine Erhebung (h) über dem Filter (1) von bis zu etwa 500 µm, vorzugsweise von bis zu etwa 200 µm und besonders bevorzugt von bis zu etwa 20 µm aufweist.

6. Filter nach einem der vorhergehenden Annsprüche, **dadurch gekennzeichnet, dass** das Filter (1) dreidimensional umgeformt ist.
